Europäisches Patentamt

European Patent Office

Office européen des brevets

(11) Veröffentlichungsnummer: **0 365 740**
**A1**

# (12) EUROPÄISCHE PATENTANMELDUNG

(21) Anmeldenummer: **89108354.5**

(22) Anmeldetag: **10.05.89**

(51) Int. Cl.⁵: **G01D 15/24**

(30) Priorität: **25.10.88 DE 3836315**

(43) Veröffentlichungstag der Anmeldung:
**02.05.90 Patentblatt 90/18**

(84) Benannte Vertragsstaaten:
**CH DE FR GB IT LI**

(71) Anmelder: **VDO Mess- und Regeltechnik GmbH**
**Hackethalstrasse 7 Postfach 229**
**D-3000 Hannover(DE)**

(72) Erfinder: **Werner, Manfred**
**Steinberg 11**
**D-3527 Spinge 1(DE)**
Erfinder: **Friedemann, Dieter**
**Mühlenstrasse 17c**
**D-3006 Burgwedel 1(DE)**

(74) Vertreter: **Klein, Thomas, Dipl.-Ing. (FH) et al**
**Sodener Strasse 9 Postfach 6140**
**D-6231 Schwalbach a. Ts.(DE)**

(54) **Linienschreiber.**

(57) Ein Linienschreiber hat einen Schreibschlitten (2), welcher mittels eines Schrittmotors (11) verschiebbar ist. Eine Elektronik erfaßt zur Festlegung der Stellung des Schreibschlittens (2) zusätzlich zu der Anzahl der Schritte des Schrittmotors (11) mit einem Sensor (13) den Hell-Dunkel-Wechsel auf einer entlang des Weges des Schreibschlittens (2) verlaufenden Referenzskala (12). Dadurch werden Referenzpunkte gewonnen, von denen aus die weitere Verstellung des Schreibschlittens (2) nach der Anzahl der Schritte des Schrittmotors (11) erfolgt.

Fig. 1

EP 0 365 740 A1

## Linienschreiber

Die Erfindung betrifft einen Linienschreiber mit einem von einem Schrittmotor angetriebenen Schreibschlitten, einer Steuerelektronik zum Steuern der einem jeweiligen Meßwert entsprechenden Anzahl von Vorschubschritten des Schreibschlittens und einer Referenzeinrichtung zur Feststellung von Fehlstellungen des Schreiberschlittens. Solche Linienschreiber sind in der Meßtechnik zur kontinuierlichen Aufzeichnung von Meßwerten allgemein bekannt und gebräuchlich.

Bei derartigen Linienschreibern steuert man die Position des Schreibschlittens mittels der Zahl der Schritte des ihn antreibenden Schrittmotors. Da es nicht auszuschließen ist, daß aus vielerlei Gründen einzelne Schritte nicht vom Schrittmotor ausgeführt werden, kann die Position des Schreibschlittens nach und nach ungenauer werden. Bei Punktschreibern läßt sich das dadurch vermeiden, daß man möglichst häufig eine Referenzeinrichtung anfährt, so daß die Zahl der Schritte immer wieder von einer Grundstellung aus gezählt wird. Bei einem Linienschreiber kann man jedoch nur vor Beginn des Schreibens eine Referenzeinrichtung anfahren, da die Schreiberspitze ständig Kontakt mit dem Papier hat und deshalb während der Meßwertaufzeichnung immer die dem Meßwert entprechende Position einnehmen muß.

Der Erfindung liegt die Aufgabe zugrunde, einen Linienschreiber der eingangs genannten Art so auszubilden, daß sich mit geringem Bauteilaufwand eine hohe Schreibgenauigkeit erzielen läßt.

Diese Aufgabe wird erfindungsgemäß dadurch gelöst, daß die Referenzeinrichtung entlang des Weges des Schreibschlittens eine Referenzskala mit einer Vielzahl von mittels eines Sensors des Schreibschlittens lesbaren Referenzpunkten aufweist.

Ein solcher Linienschreiber arbeitet mit einer Kombination eines Steuersystems nach Schritten und eines Steuersystems nach einer Skala. Da diese Skala nicht die genaue Position des Schreibschlittens, sondern nur eine größere Anzahl von Referenzpunkten über den Schreibschlittenweg festlegen muß, kann sie ein relativ grobes Raster aufweisen. Entsprechend einfach kann der die Skala abtastende Sensor gestaltet sein. Die genaue Position des Schreibschlittens wird durch die Anzahl der nach Überfahren eines Referenzpunktes erforderlichen Schritte des Schrittmotors festgelegt.

Der erfindungsgemäße Linienschreiber erreicht mit sehr geringem Aufwand eine hohe Langzeitgenauigkeit, ohne daß ein zyklisches Anfahren von Referenzpunkten erforderlich wird. Umwelteinflüsse, Fehlbedienung und dergleichen wird durch Überschreiten der zugehörigen Referenzpunkte erkannt und kann daher korrigiert werden. Zwischen den Referenzpunkten wird auf bekannte Weise durch Zählen der Anzahl von Schritten des Schrittmotors die Stellung des Schreibschlittens gesteuert.

Konstruktiv besonders einfach ist der Linienschreiber gestaltet, wenn die Referenzskala ein Hell-Dunkel-Raster aufweist und der Sensor ein optoelektronischer Sensor ist.

Für den Linienschreiber kann ein üblicher, für andere Einsatzgebiete gebräuchlicher und deshalb kostengünstig erhältlicher Sensor benutzt werden, wobei der Sensor einen Sender und einen Empfänger aufweisen kann.

Der Linienschreiber vermag mit einem ganz besonders einfachen Reflexlichtsensor oder Durchlichtsensor zu arbeiten, wenn zwischen dem Sensor und der Referenzskala am Schreiberschlitten eine Blende angeordnet ist, welche hintereinander, maßlich mit den Hell-Bereichen der Referenzskala übereinstimmende Durchlässe aufweist.

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben. In ihr zeigen die

Fig. 1 eine schematische Draufsicht auf einen für die Erfindung wesentlichen Bereich eines Linienschreibers,

Fig. 2 eine Prinzipskizze des Sensorbereiches des Linienschreibers,

Fig. 3 den in Figur 2 dargestellten Sensorbereich in einer geringfügig anderen Stellung des Schreibschlittens.

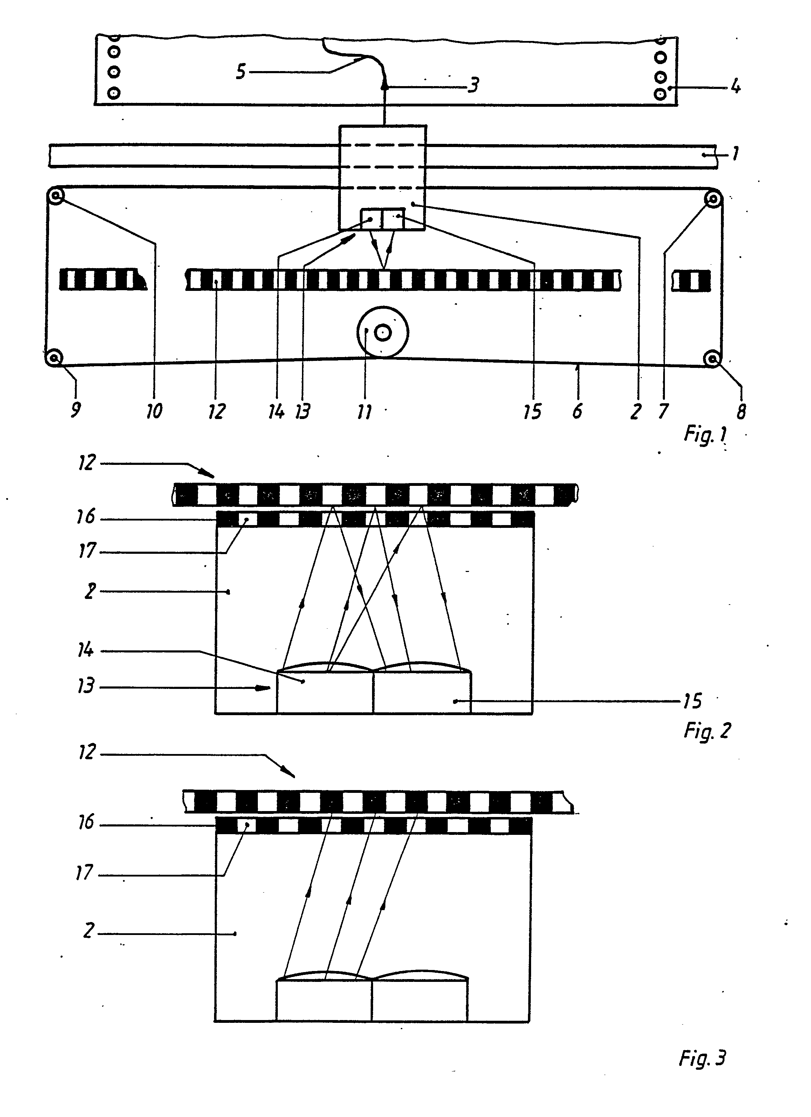

Der in Figur 1 als Ganzes gezeigte Linienschreiber hat auf einer Führungsstange 1 einen Schreibschlitten 2, welcher eine Schreibfeder 3 hältert. Diese Schreibfeder 3 vermag auf übliche Weise auf Schreiberpapier 4 eine einen Meßwert wiedergebende Kurve 5 zu zeichnen.

Zum Verfahren des Schreibschlittens 2 auf der Führungsstange 1 ist dieser mit einem Seil 6 verbunden, welches über Umlenkrollen 7, 8, 9, 10 geführt ist und von einem Schrittmotor 11 um definierte Beträge in der einen oder anderen Richtung bewegt werden kann. Bei üblichen Punktschreibern zählt man ausgehend von einer Nullstellung jeweils die Zahl der Schritte des Schrittmotors 11, um die genaue Stellung des Schreibschlittens festlegen zu können. Zusätzlich zu dieser Methode bedient man sich gemäß der Erfindung einer Referenzskala 12, die ein relativ grobes Hell-Dunkel-Raster aufweist. Zum Erkennen des Hell-Dunkel-Rasters dient ein Sensor 13 am Schreibschlitten 2. Dieser Sensor 13 hat einen Sender 14 und gleich daneben einen Empfänger 15. Das vom Sender 14 ausgesandte Licht wird zum Empfänger hin reflektiert, sofern es auf einen hellen Bereich der Referenzskala 12 trifft. Dadurch kann eine Elektronik den Hell-Dunkel-Wechsel erfassen und hieraus die Position des Schreibschlittens 2 beim Wechsel zwischen einem hellen und einem dunklen Bereich ermitteln. Anschließend kann der Schlitten durch eine konkrete Anzahl von Schritten des Schrittmotors 11 in eine gewünschte Stellung zwischen zwei durch den Hell-Dunkel-Wechsel bestimmten Referenzpunkten auf der Referenzskala verfahren werden.

Die Figur 2 zeigt, daß zwischen der Referenzskala 12 und dem Sensor 13 auf dem Schreibschlitten 2 eine Blende 16 angeordnet sein kann, die genau das gleiche Hell-Dunkel-Raster hat wie die Referenzskala. In der in Figur 2 gezeigten Stellung fluchten die hellen Bereiche der Referenzskala 12 mit den entsprechenden Durchlässen 17 der Blende. Dadurch wird 50 % des vom Sender 14 abgestrahlten Lichtes zum Empfänger 15 hin reflektiert. Es ergibt sich ein Weißwert von 50 %.

Die Figur 3 zeigt die Gegebenheiten für den Fall, daß sich der Schreibschlitten 2 um die Länge eines Hellbereiches auf der Referenzskala 12 verschoben hat. Die Durchlässe 17 der Blende 16 fluchten dann jeweils mit einem Dunkelbereich der Referenzskala 12. Dadurch vermag kein Licht auf helle Bereiche der Referenzskala 12 zu treffen und reflektiert zu werden. Es ergibt sich somit ein Weißwert von 0 %.

## Ansprüche

1. Linienschreiber mit einem von einem Schrittmotor angetriebenen Schreibschlitten, einer Steuerelektronik zum Steuern der einem jeweiligen Meßwert entsprechenden Anzahl von Vorschubschritten des Schreibschlittens und einer Referenzeinrichtung zur Feststellung von Fehlstellungen des Schreiberschlittens, dadurch gekennzeichnet, daß die Referenzeinrichtung entlang des Weges des Schreibschlittens (2) eine Referenzskala (12) mit einer Vielzahl von mittels eines Sensors (13) des Schreibschlittens (2) lesbaren Referenzpunkten aufweist.

2. Linienschreiber nach Anspruch 1, dadurch gekennzeichnet, daß die Referenzskala (12) ein Hell-Dunkel-Raster aufweist und der Sensor (13) ein optoelektronischer Sensor ist.

3. Linienschreiber nach Anspruch 2, dadurch gekennzeichnet, daß der Sensor (13) einen Sender (14) und einen Empfänger (15) aufweist.

4. Linienschreiber nach zumindest einem der vorangehenden Ansprüche, dadurch gekennzeichnet, daß zwischen dem Sensor (13) und der Referenzskala (12) am Schreibschlitten (2) eine Blende (16) angeordnet ist, welche hintereinander, maßlich mit den Hell-Bereichen der Referenzskala (12) übereinstimmende Durchlässe (17) aufweist.

Fig. 1

Fig. 2

Fig. 3

| | **DOCUMENTS CONSIDERED TO BE RELEVANT** | | | EP 89108354.5 |
|---|---|---|---|---|
| Category | Citation of document with indication, where appropriate, of relevant passages | | Relevant to claim | CLASSIFICATION OF THE APPLICATION (Int. Cl.) 5 |
| X | US - A - 4 359 751 (GOLDSCHMIDT) * Spalte 3, 2. Absatz; Spalte 4, Zeile 48 * | | 1-3 | G 01 D 15/24 |
| A | | | 4 | |
| A | DE - A - 1 623 841 (SIEMENS) * Anspruch 1 * | | 1 | |
| | | | | **TECHNICAL FIELDS SEARCHED (Int. Cl.) 5** |
| | | | | G 01 D 15/00 |

The present search report has been drawn up for all claims

| Place of search | Date of completion of the search | Examiner |
|---|---|---|
| WIEN | 10-01-1990 | KUNZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82